# EUROPEAN PATENT SPECIFICATION

(11) **EP 3 208 595 B1**
(45) Date of publication and mention of the grant of the patent: **12.02.2020**
(21) Application number: 15858117.3
(22) Date of filing: 30.12.2015
(51) Int. Cl.: G01M 17/007, G01M 17/013, G01M 17/08

(54) **ADHESION TEST SYSTEM AND METHOD**
ADHÄSIONSTESTSYSTEM UND VERFAHREN
SYSTÈME ET PROCÉDÉ DE TEST D'ADHÉRENCE

(30) Priority: 24.12.2015 CN 201521083723 U; 24.12.2015 CN 201510976709
(43) Date of publication of application: 23.08.2017
(73) Proprietor: CRRC Xi'An Yongejietong Electric Co., Ltd., Xi'an Shaanxi 710018 (CN)
(72) Inventor: HOU, Xiaojun, Xi'an Shaanxi 710018 (CN); CHEN, Aili, Xi'an Shaanxi 710018 (CN); ZHANG, Caixia, Xi'an Shaanxi 710018 (CN); TIAN, Pengbo, Xi'an Shaanxi 710018 (CN)
(74) Representative: Pfenning, Meinig & Partner mbB
(86) International application number: PCT/CN2015/099819
(87) International publication number: WO 2017/107239

(56) References cited:
- CN-A- 104 198 375
- CN-A- 104 374 586
- CN-A- 104 729 992
- JP-A- 2009 186 363
- CHEN H ET AL: "Experimental investigation of influential factors on adhesion between wheel and rail under wet conditions", WEAR, ELSEVIER SEQUOIA, LAUSANNE, CH, vol. 265, no. 9-10, 30 October 2008 (2008-10-30), pages 1504-1511, XP023437333, ISSN: 0043-1648, DOI: 10.1016/J.WEAR.2008.02.034 [retrieved on 2008-06-05]
- CHEN, H. ET AL.: 'Experimental investigation of influential factors on adhesion between wheel and rail under wet conditions' WEAR vol. 265, 05 June 2008, ISSN 0043-1648 XP023437333
- KUMAR, S. ET AL.: 'Wheel/rail adhesion wear investigation using a quarter scale laboratory testing facility' PROCEEDINGS OF THE IEEE 31 January 1996, ISSN 0018-9219 pages 247 - 254, XP055395741

## Description

### TECHNICAL FIELD

The present invention relates to mechanical technique and, more particularly to an adhesion test system and an adhesion test method.

### BACKGROUND

In an adhesion state, the maximum value of a longitudinally and horizontally acting force between a wheel and rail is called as an adhesive force, and a ratio between the adhesive force and a vertical load between the wheel and rail is referred to as an adhesion coefficient. The adhesion coefficient is a static friction coefficient at a contact point between a locomotive traction wheel and a steel rail, namely, a sliding friction coefficient when a relative speed between the locomotive traction wheel and the steel rail tends to zero. It depends on many factors, which mainly include: 1. a stress condition of the traction wheel; 2. conditions of surfaces of the traction wheel tread and the rail; 3. diameter and assembly of the traction wheel; 4. an operating speed of the locomotive; 5. curve radius of a railway route.

In the prior art, adhesion control is generally realized by a traction control program, wherein it is to determine whether the wheel is in an idle-sliding state or in a normal traveling state by collecting and analyzing information on a motor speed, a motor torque and the like, and then the traction control program can perform corresponding processing operation on the basis of the determined wheel state, so that the locomotive can run under a maximum traction force currently allowed by the running route, and thus achieve a maximum adhesion utilization.

A disadvantage in the prior art is that the traction control program of a locomotive is mainly debugged in a locomotive on-line debugging manner, which is laborious and time-consuming, and once the locomotive wheel idles on the steel rail, the locomotive traction force will drop drastically, or even disappear, and also the wheel or rail may suffer a scratch, resulting in a big loss. D1(CHEN H ET AL: "Experimental investigation of influential factors on adhesion between wheel and rail under wet conditions", WEAR, ELSEVIER SEQUOIA, LAUSANNE,CH, vol.265,no.9-10,30 October 2008(2008-10-30).pages 1504-1511, XP023437333, ISSN:0043-1648, DOI:10.1016/J.WAER.2008.02.034) discloses an adhesion test system comprising a driving wheel for simulating a traveling wheel, a driven wheel for simulating a steel rail, a driving device, a speed measuring device and a control device, wherein the driving device is configured to provide a driving force for rotating the driving wheel; the driving wheel is configured to drive the driven wheel to rotate under the drive of the driving device; the speed measuring device is configured to detect rotation speeds of the driving wheel and the driven wheel, and transmit the rotation speeds of the driving wheel and the driven wheel to the control device; the control device is configured to determine whether an idle-sliding phenomenon occurs according to the rotation speeds of the driving wheel and the driven wheel, and generate an idle-sliding signal when it is determined that an idle-sliding phenomenon occurs.

### SUMMARY

The present invention provides an adhesion test system and an adhesion test method, so as to solve the technical problem in the prior art that locomotive on-line debugging easily causes a big loss.

The present invention provides an adhesion test system according to the appended claim 1, including: a driving wheel for simulating a traveling wheel, a driven wheel for simulating a steel rail, a driving device, a speed measuring device and a control device; wherein
the driving device is configured to provide a driving force for rotating the driving wheel;
the driving wheel is configured to drive the driven wheel to rotate driven by the driving device;
the speed measuring device is configured to detect rotation speed of the driving wheel and rotation speed of the driven wheel, and transmit the rotation speed of the driving wheel and the rotation speed of the driven wheel to the control device; and
the control device is configured to determine according to the rotation speeds of the driving wheel and the driven wheel whether an idle-sliding phenomenon occurs, and generate an idle-sliding signal when an idle-sliding phenomenon occurs.

Furthermore, the system further includes: an idle wheel in contact with the driving wheel and the driven wheel, respectively.

The driving wheel drives the driven wheel to rotate via the idle wheel.

Furthermore, the system further includes: a force exerting device.

The force exerting device is to adjust a radial pressure on the driving wheel and the driven wheel, so as to simulate different adhesion states.

Furthermore, the system further includes: a rack for receiving the driving wheel and the driven wheel.

The rack comprises a top cover and a bottom base, and the top cover is fixedly bolted to the bottom base.

The bottom base is connected to the driving wheel and the driven wheel via a bearing, respectively.

Furthermore, the force exerting device includes: a force exerting cover and a force exerting lever;
a through-hole is opened on the top cover, an internal thread is provided within the through-hole, an external thread is provided on the force exerting cover, and the force exerting cover is connected to the top cover via the internal thread and the external thread;
one end of the force exerting lever protrudes into the through-hole, a spring is provided between the force exerting lever and the force exerting cover;
the other end of the force exerting lever acts on the idle wheel, so as to apply a pressure to the idle wheel.

Furthermore, the force exerting device further includes: a force exerting wheel;
the other end of the force exerting lever is connected to the force exerting wheel via a bearing;
the force exerting wheel is in contact with the idle wheel.

Furthermore, the force exerting device includes: a hydraulic cylinder;
a piston end of the hydraulic cylinder is fixedly connected to the rack, and a cylinder body end of the hydraulic cylinder away from the piston end is connected to the idle wheel via a bearing.

Furthermore, the speed measuring device includes two speed measuring gears and two speed sensors;
wherein, one speed measuring gear is configured to rotate driven by the driving wheel, and the other speed measuring gear is configured to rotate driven by the driven wheel; and
the two speed sensors are configured to detect rotation speeds of the two speed measuring gears, respectively, so that the control device can determine rotation speeds of the driving wheel and the driven wheel.

Furthermore, the speed measuring device includes two angle encoders;
wherein one angle encoder is sleeved on a central shaft of the driving wheel for detecting rotation speed of the driving wheel; the other angle encoder is sleeved on a central shaft of the driven wheel for detecting rotation speed of the driven wheel.

The present invention also provides an adhesion test method according to the appended claim 9 and based on any adhesion test system described above, including:
receiving, by a control device, rotation speeds of a driving wheel and a driven wheel, transmitted by a speed measuring device;
multiplying, by the control device, based on the rotation speeds of the driving wheel and the driven wheel, the rotation speed of the driving wheel by a radius of the driving wheel to produce a first product, and multiplying the rotation speed of the driven wheel by a radius of the driven wheel to produce a second product;
determining, by the control device, whether a difference between the first product and the second product is greater than a preset threshold;
generating, by the control device, an idle-sliding signal, when the difference is greater than the preset threshold.

In the adhesion test system and the adhesion test method provided in the present invention, the driving wheel drives the driven wheel to rotate, under the drive of the driving device, the speed measuring device detects rotation speeds of the driving wheel and the driven wheel, and transmits the rotation speeds of the driving wheel and the driven wheel to the control device, so that the control device can determine whether an idle-sliding phenomenon occurs according to the rotation speeds of the driving wheel and the driven wheel, and generate an idle-sliding signal when it is determined that an idle-sliding phenomenon occurs, and therefore, instead of a locomotive on-line debugging, the actual operating state of the train can be simulated, thereby avoiding occurrence of accidents of scratching the wheel or the steel rail due to improper control in the on-line debugging, and effectively reducing the debugging cost and shortening the debugging period.

### BRIEF DESCRIPTION OF DRAWINGS

FIG. 1 is a schematic structural diagram of an adhesion test system according to Example 1 not part of the present invention;
FIG. 2 is an axonometric diagram of an adhesion test system according to Embodiment 1 of the present invention;
FIG. 3 is a front view of an adhesion test system according to Embodiment 3 of the present invention;
FIG. 4 is a sectional view taken along line A-A shown in FIG. 3;
FIG. 5 is a sectional view taken along line B-B shown in FIG. 4; and
FIG. 6 is a flowchart of an adhesion test method according to Embodiment 2 of the present invention.

### Reference numerals:

101-Driving wheel 102-Driven wheel 201-Driving wheel 202-Driven wheel 203-Idle wheel 204-Top cover 205-Bottom base 206-Bearing 207-Sleeve 208-Bearing end cover 209-Force exerting cover 210-Force exerting lever 211-Spring 212-Force exerting wheel 213-Speed measuring gear 214-Speed sensor

### DESCRIPTION OF EMBODIMENTS

In order to make the objects, technical solutions and advantages of the embodiments of the present invention clearer, the technical solutions in the embodiments of the present invention will be described hereinafter clearly and completely with reference to the accompanying drawings in relative to the embodiments of the present invention.

### Example 1

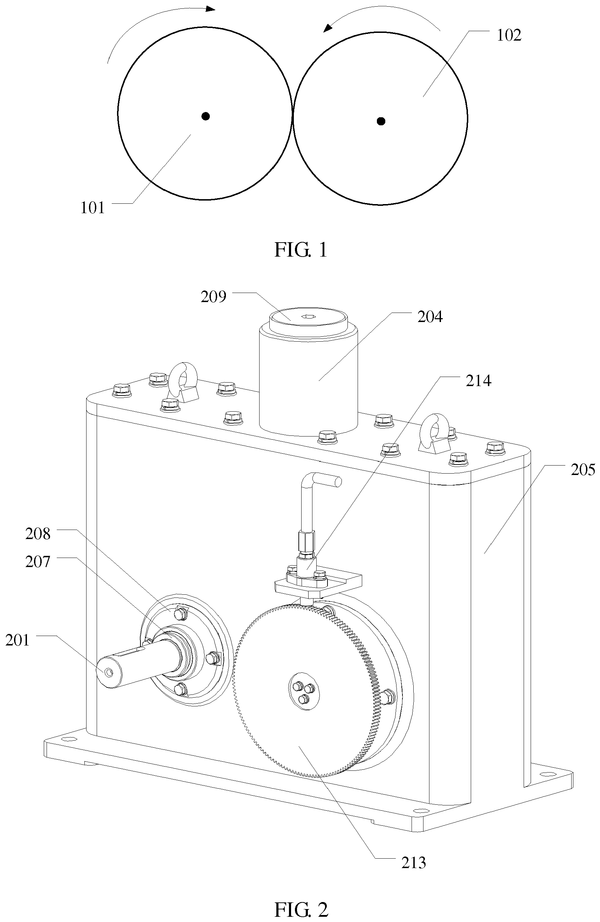

Example 1 not being part of the present invention provides an adhesion test system. FIG. 1 is a schematic structural diagram of an adhesion test system according to Example 1 not being part of the present invention. As shown in FIG. 1, the adhesion control system in this example can include: a driving wheel 101 for simulating a traveling wheel, a driven wheel 102 for simulating a steel rail, a driving device, a speed measuring device and a control device (the driving device, the speed measuring device and the control device are not shown); wherein
the driving device is to provide a driving force for rotating the driving wheel 101;
the driving wheel 101 is to drive the driven wheel 102 to rotate, under the drive of the drive device;
the speed measuring device is configured to detect rotation speeds of the driving wheel 101 and the driven wheel 102, and transmit the rotation speeds of the driving wheel 101 and the driven wheel 102 to the control device; and
the control device is configured to determine according to the rotation speeds of the driving wheel 101 and the driven wheel 102 whether an idle-sliding phenomenon occurs, and generate an idle-sliding signal when it is determined that an idle-sliding phenomenon occurs.

In this example, the driving wheel 101 and the driven wheel 102 can be used to simulate the traveling wheel and the steel rail, respectively, the driving wheel 101 is in contact with the driven wheel 102, and preferably, the driving wheel 101 can apply a certain pressure to the driven wheel 102, and when the driving device drives the driving wheel 101 to rotate, since there is a frictional force between the driving wheel 101 and the driven wheel 102, the driving wheel 101 will drive the driven wheel 102 to rotate, so as to simulate a driving process.

The driving device can be a drive motor or other device that can output torque, and be connected to the driving wheel 101 via a member, such as a coupling.

The speed measuring device can include an angle encoder or other sensors that can detect a rotation speed. Preferably, the speed measuring device can include two angle encoders, wherein one angle encoder is sleeved on a central shaft of the driving wheel 101 for detecting rotation speed of the driving wheel 101; the other angle encoder is sleeved on a central shaft of the driven wheel 102 for detecting rotation speed of the driven wheel 102.

Output ends of the two angle encoders are electrically connected to the control device, to transmit the detected rotation speeds to the control device.

The control device can determine whether an idle-sliding phenomenon occurs, according to the rotation speeds of the driving wheel 101 and the driven wheel 102. Specifically, if the radius of the driving wheel 101 is equal to the radius of the driven wheel 102, then in a normal state, the driving wheel 101 and the driven wheel 102 have the same rotation speed. Thus when the control device determines that the rotation speed of the driving wheel 101 is not equal to that of the driven wheel 102, it can be determined that an idle-sliding phenomenon occurs.

If the radius of the driving wheel 101 is not equal to the radius of the driven wheel 102, then in a normal state, multiplying the rotation speed of the driving wheel 101 by the radius of the driving wheel 101 should be equal to multiplying the rotation speed of the driven wheel 102 by the radius of the driven wheel 102, and if the product of the rotation speed of the driving wheel 101 and the radius of the driving wheel 101 is not equal to the product of the rotation speed of the driven wheel 102 and the radius of the driven wheel 102, then it can be determined that an idle-sliding phenomenon occurs.

In the case of a certain error, the control device can determine whether the product of the rotation speed and the radius of the driving wheel 101 and the product of the rotation speed and the radius of the driven wheel 102 are greater than a preset threshold, and if yes, then it can be determined that an idle-sliding phenomenon occurs, and if no, then it can be determined that no idle-sliding phenomenon occurs. The preset threshold can be set as required.

After the control device generates an idle-sliding signal, a traction control program can perform corresponding processing operation based on the idle-sliding signal, for example, reduce a traction force output by the driving device. The traction control program can be set within other devices, or integrated in the control device, and accordingly, the idle-sliding signal generated by the control device can be an electrical signal, such as a high or low level signal, or a software signal, such as setting a certain parameter to be 1, and in this example the idle-sliding signal is not limited thereto.

Preferably, when the control device determines no idle-sliding phenomenon occurs according to the rotation speeds of the driving wheel 101 and the driven wheel 102, a signal in a normal state can be generated, which makes the traction control program can perform corresponding processing operation based on the signal in a normal state, for example, increase a traction force output by the driving device.

In practical application, after the traction control program is designed by a staff member, there is no need to debug the traction control program via a locomotive on-line debugging, it only needs to debug it by using the adhesion test system provided in this example. The adhesion test system provided in this example can simulate the actual operating state of the train, and generate an idle-sliding signal when an idle-sliding phenomenon occurs, to facilitate the staff member to monitor whether there is a problem in the processing procedure of the traction control program when the idle-sliding phenomenon occurs, and debug the traction control program accordingly.

The adhesion test system provided in this example is provided with a driving wheel 101 for simulating a traveling wheel and a driven wheel 102 for simulating a steel rail. Under the drive of the driving device, the driving wheel 101 can drive the driven wheel 102 to rotate, the speed measuring device can detect rotation speeds of the driving wheel 101 and the driven wheel 102, and transmit the rotation speeds of the driving wheel 101 and the driven wheel 102 to the control device, and then the control device can determine whether an idle-sliding phenomenon occurs, according to the rotation speeds of the driving wheel 101 and the driven wheel 102, and generate an idle-sliding signal when it is determined that an idle-sliding phenomenon occurs. Therefore, instead of a locomotive on-line debugging, the actual operating state of the train can be simulated, thereby avoiding occurrence of accidents of scratching the wheel or the steel rail caused by improper control in the on-line debugging, and effectively reducing the debugging cost and shortening the debugging period.

### Embodiment 1

Embodiment 1 of the present invention provides an adhesion test system. In this embodiment, an idle wheel is added to achieve transmission of force and speed between the driving wheel and the driven wheel, on the basis of the technical solutions in Example 1 not being part of the invention.

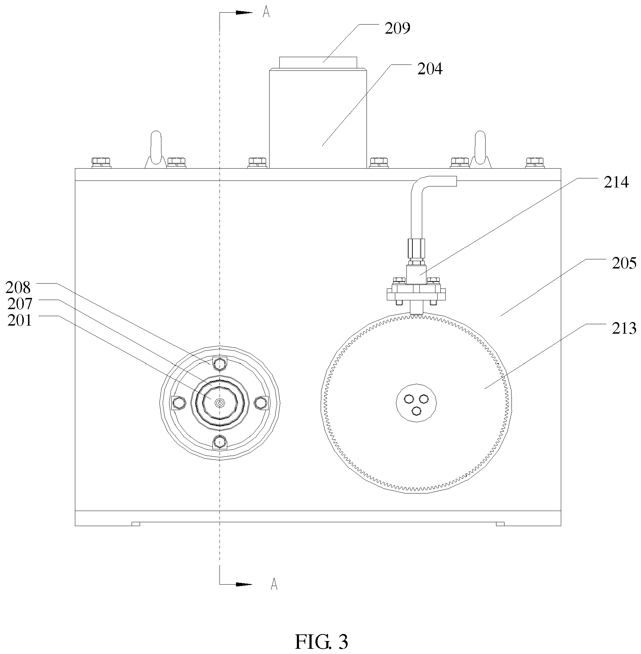

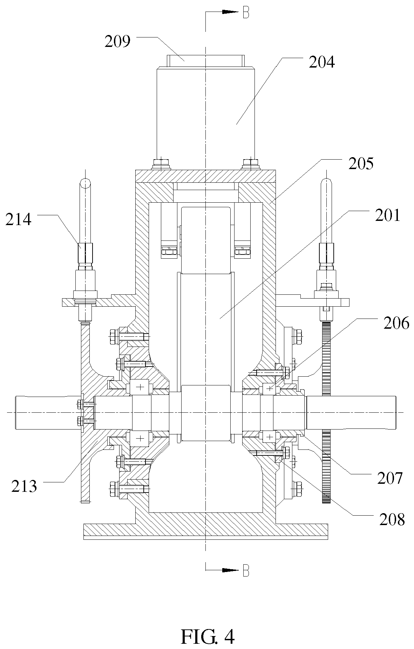

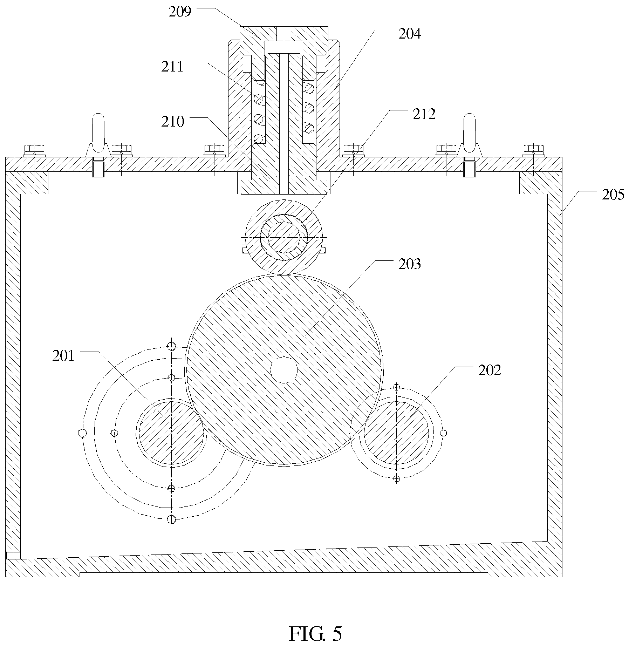

FIG. 2 is an axonometric diagram of an adhesion test system according to Embodiment 2 of the present invention. FIG. 3 is a front view of an adhesion test system according to Embodiment 1 of the present invention. FIG. 4 is a sectional view taken along line A-A shown in FIG. 3. FIG. 5 is a sectional view taken along line B-B shown in FIG. 4. As shown in FIG. 2 to FIG. 5, the adhesion test system in this embodiment can include: a driving wheel 201, a driven wheel 202, an idle wheel 203, a driving device, a speed measuring device and a control device;
wherein functions of the driving wheel 201, the driven wheel 202, the driving device, the speed measuring device and the control device are similar to those of the driving wheel 101, the driven wheel 102, the driving device, the speed measuring device and the control device, so the details will not be repeated here again.

In this embodiment, the idle wheel 203 is in contact with the driving wheel 201 and the driven wheel 202, respectively, and the driving wheel 201 can drive the driven wheel 202 to rotate via the idle wheel 203.

Specifically, the driving wheel 201 is in contact with the idle wheel 203, and preferably, the driving wheel 201 can apply a certain pressure on the idle wheel 203, and thus when the driving device drives the driving wheel 201 to rotate, since there is a frictional force between the driving wheel 201 and the idle wheel 203, the driving wheel 201 will drive the idle wheel 203 to rotate; the idle wheel 203 is in contact with the driven wheel 202, and preferably, the idle wheel 203 can apply a certain pressure on the driven wheel 202, and thus when the driving wheel 201 drives the idle wheel 203 to rotate, since there is a frictional force between the idle wheel 203 and the driven wheel 202, the idle wheel 203 also will drive the driven wheel 202 to rotate. Speed transmission between the driving wheel 201 and the driven wheel 202 is thus achieved.

Since the cost of the idle wheel 203 is much lower than the costs of the driving wheel 201 and the driven wheel 202, providing an idle wheel 203 between the driving wheel 201 and the driven wheel 202 to achieve speed transmission via the idle wheel 203 can solve the problem of a big loss caused by scratch due to direct contact between the driving wheel 201 and the driven wheel 202, and thereby save maintenance cost of the system.

In this embodiment, the driving wheel 201, the idle wheel 203 and the driven wheel 202 are all provided in a rack, and the rack can provide an enclosed space and safety protection for speed transmission between the driving wheel 201, the idle wheel 203 and the driven wheel 202.

Specifically, the rack can include a top cover 204 and a bottom base 205, and the top cover 204 is directly fixedly connected to the bottom base 205. In this embodiment, the top cover 204 is fixedly bolted to the bottom base 205, which has low cost and is convenient to detach.

The driving wheel 201, the driven wheel 202 and the idle wheel 203 are all connected to the bottom base 205 via a bearing, and the bearing can be a floating bearing. As shown in FIG. 4, the driving wheel 201 can be connected to the bottom base 205 via a bearing 206, a sleeve 207 and a bearing end cover 208 are provided at the outside of the bearing 206, and in practical application, the bottom base 205 also can be provided with a mounting hole, the bearing 206 is sleeved on a central shaft of the driving wheel 201, and the central shaft of the driving wheel 201 protrudes from the mounting hole and is fixed to the mounting hole.

An inner ring of the bearing 206 is fixedly connected to the central shaft of the driving wheel 201, and an outer ring of the bearing 206 is fixedly connected to the bottom base 205. Specifically, these fixed connections can be achieved in various manners, such as an interference fit, a spline, and a flat key, and this embodiment is not limited thereto. The connection between the driven wheel 202 and the bottom base 205 is similar to the connection between the driving wheel 201 and the bottom base 205, so the details will not be repeated herein again. The driving wheel 201 and the driven wheel 202 can be located obliquely below the idle wheel 203, for supporting the idle wheel 203.

In order to test operation status of the traction control program under constantly changed adhesive forces, the adhesion test system in this embodiment can be further provided with a force exerting device. The force exerting device is configured to adjust a radial pressure on the driving wheel 201 and the driven wheel 202, so as to simulate different adhesion states.

Specifically, the force exerting device can apply a force to the idle wheel 203, so as to change the pressure between the driving wheel 201 and the idle wheel 203, and the pressure between the idle wheel 203 and the driven wheel 202.

In this embodiment, the force exerting device can include: a force exerting cover 209 and a force exerting lever 210. A through-hole is opened on the top cover 204, an internal thread is provided within the through-hole, an external thread is provided on the force exerting cover 209, and the force exerting cover 209 is connected to the top cover 204 via the internal thread and the external thread; one end of the force exerting lever 210 protrudes into the through-hole, and a spring 211 is provided between the force exerting lever 210 and the force exerting cover 209.

Since the spring 211 is provided between the force exerting lever 210 and the force exerting cover 209, and when the force exerting cover 209 is screwed towards the force exerting lever 210, the force on the force exerting lever 210 increases, whereas the other end of the force exerting lever 210 acts on the idle wheel 203 and applies a pressure to the idle wheel 203, the pressure on the idle wheel 203 also increases when the force exerting cover 209 is screwed in.

In order to enable a pressure to act on the idle wheel 203, the force exerting lever 210 can directly contact with the bearing of the idle wheel 203; or, the force exerting device can further include a force exerting wheel 212, the other end of the force exerting lever 210 is connected to the force exerting wheel 212 via a bearing, the force exerting wheel 212 is in contact with the idle wheel 203, and the force exerting wheel 212 can rotate under the drive of the idle wheel 203, and transmit the pressure suffered by the force exerting lever 210 to the idle wheel 203.

As shown in FIG. 3 and FIG. 4, the force exerting device is provided above the idle wheel 203, the driving wheel 201 and the driven wheel 202 are provided below the idle wheel 203, and when the force exerting cover 209 is screwed in, the pressure suffered by the idle wheel 203 increases, and thereby, the pressure between the idle wheel 203 and the driving wheel 201 increases, and the pressure between the idle wheel 203 and the driven wheel 202 also increases; and when the force exerting cover 209 is screwed out, the pressure on the idle wheel 203 decreases, and thereby the pressure between the idle wheel 203 and the driving wheel 201 decreases, and the pressure between the idle wheel 203 and the driven wheel 202 also decreases. In this way, simulations of different adhesion states are achieved at a low cost and an easier control.

In another embodiment, the force exerting device can include a hydraulic cylinder. A piston end of the hydraulic cylinder can be fixedly connected to the rack, and a cylinder body end of the hydraulic cylinder away from the piston end can be connected to the idle wheel 203 via a bearing, so as to apply a certain pressure to the idle wheel 203, or the cylinder body end can apply a force to the idle wheel 203 via other force exerting mechanism, such as a force exerting wheel. The hydraulic cylinder can generate a big pressure, and can stably adjust the pressure.

In another example not being part of the invention, the force exerting device can include a pneumatic cylinder. The specific implementation of the pneumatic cylinder is similar to that of the hydraulic cylinder, so the details will not be repeated herein again.

In this example, the speed measuring device can include two speed measuring gears 213 and two speed sensors 214. Wherein, one speed measuring gear 213 is configured to rotate driven by the driving wheel 201, and the other speed measuring gear 213 is configured to rotate driven by the driven wheel 202; the two speed sensors 214 are configured to detect rotation speeds of the two speed measuring gears 213, respectively, so that the control device can determine rotation speeds of the driving wheel 201 and the driven wheel 202.

After detecting the rotation speeds of the speed measuring gears, the speed sensors 214 can transmit the rotation speeds of the speed measuring gears to the control device, and the control device can determine the rotation speed of the driving wheel 201 or the driven wheel 202 according to the rotation speeds of the speed measuring gears, and thereby determine whether an idle-sliding phenomenon occurs.

During the process of an actual debugging, the staff member can change the pressure between the idle wheel 203 and the driving wheel 201, and the pressure between the idle wheel 203 and the driven wheel 202, by rotating the force exerting cover 209, so as to simulate different adhesion states, and thus the staff member can conveniently detect whether there is a problem in the processing procedure of the traction control program when the adhesion state changes, and if there is a problem, the staff member will correspondingly debug the traction control program in time.

In the adhesion test system provided in this embodiment, speed transmission between the driving wheel 201 and the driven wheel 202 can be achieved via the idle wheel 203, and compression deformation of the spring 211 can be adjusted by screwing-in and screwing-out operations of the thread, and then different adhesion states are simulated, to achieve debugging of the traction control program when the adhesion state changes. This has advantages of for example energy conservation and environment friendliness, as well as low cost.

On the basis of the technical solution provided in the above embodiment, preferably, the central shaft of the driven wheel 202 is connected to a generator via a flywheel, and in this way, most of the electrical energy can be recycled, which is more energy-saving and environmentally friendly.

### Embodiment 2

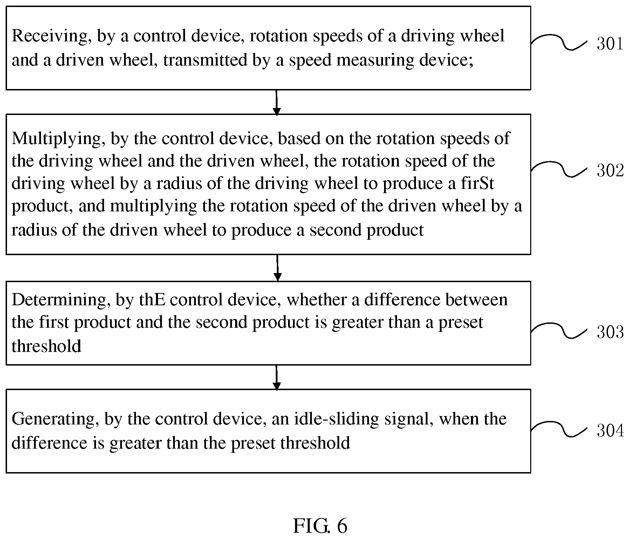

Embodiment 2 of the present invention provides an adhesion test method. The adhesion test method provided in this embodiment is based on the adhesion test system in any one of the above embodiments. FIG. 6 is a flowchart of an adhesion test method according to Embodiment 3 of the present invention. As shown in FIG. 6, the adhesion test method in this embodiment can include:
Step 301, receiving, by a control device, rotation speeds of a driving wheel and a driven wheel, transmitted by a speed measuring device.
Step 302, multiplying, by the control device, based on the rotation speeds of the driving wheel and the driven wheel, the rotation speed of the driving wheel by a radius of the driving wheel to produce a first product, and multiplying the rotation speed of the driven wheel by a radius of the driven wheel to produce a second product.
Step 303, determining, by the control device, whether a difference between the first product and the second product is greater than a preset threshold.
Step 304, generating, by the control device, an idle-sliding signal, when the difference is greater than the preset threshold.

The specific implementation principle of the adhesion test method provided in this embodiment is similar to that in Embodiment 1, so the details will not be repeated herein again.

In the adhesion test method provided in this embodiment, the driving wheel drives the driven wheel to rotate, under the drive of the driving device, the speed measuring device detects rotation speeds of the driving wheel and the driven wheel, and transmits the rotation speeds of the driving wheel and the driven wheel to the control device, so that the control device can determine whether an idle-sliding phenomenon occurs according to the rotation speeds of the driving wheel and the driven wheel, and generate an idle-sliding signal when it is determined that an idle-sliding phenomenon occurs, and therefore, instead of a locomotive on-line debugging, the actual operating state of the train can be simulated, thereby avoiding occurrence of accidents of scratching the wheel or the steel rail due to improper control in the on-line debugging, and effectively reducing the debugging cost and shortening the debugging period.

Furthermore, the control device can determine severity of idling and sliding, based on a difference between the first product and the second product. For example, if the difference is between 10% and 20%, the severity is considered to be level 1, if difference is between 20% and 30%, the severity is considered to be level 2, and so forth. The greater the difference is, the higher the level of severity is, and after determining the level of severity, the control device can generate a corresponding signal of the level of severity, so that the staff member can conveniently determine whether there is a problem in the treatment of debugging the traction control program at different levels of severity.

## Claims

1. An adhesion test system, comprising a driving wheel (201) for simulating a traveling wheel, a driven wheel (202) for simulating a steel rail, a driving device, a speed measuring device and a control device;
the driving device is configured to provide a driving force for rotating the driving wheel (201);
the driving wheel (201) is configured to drive the driven wheel (202) to rotate under the drive of the driving device;
the speed measuring device is configured to detect rotation speeds of the driving wheel (201) and the driven wheel (202), and transmit the rotation speeds of the driving wheel (201) and the driven wheel (202) to the control device; and
the control device is configured to determine whether an idle-sliding phenomenon occurs according to the rotation speeds of the driving wheel (201) and the driven wheel (202), and generate an idle-sliding signal when it is determined that an idle-sliding phenomenon occurs;
**characterized by** the adhesion test system further comprising an idle wheel (203) in contact with the driving wheel (201) and the driven wheel (202), respectively; wherein the driving wheel (201) is configured to drive the driven wheel (202) to rotate via the idle wheel (203).

2. The system according to claim 1, further comprising a force exerting device, wherein the force exerting device is configured to adjust a radial pressure on the driving wheel (201) and the driven wheel (202), so as to simulate different adhesion states.

3. The system according to claim 2, further comprising a rack for receiving the driving wheel (201) and the driven wheel (202), wherein
the rack comprises a top cover (204) and a bottom base (205), and the top cover (204) is fixedly bolted to the bottom base (205); and
the bottom base (205) is connected to the driving wheel (201) and the driven wheel (202) via a bearing (206), respectively.

4. The system according to claim 3, wherein, the force exerting device comprises a force exerting cover (209) and a force exerting lever (210), wherein
a through-hole is opened on the top cover (204), an internal thread is provided within the through-hole, an external thread is provided on the force exerting cover (209), and the force exerting cover (209) is connected to the top cover (204) via the internal thread and the external thread;
one end of the force exerting lever (210) protrudes into the through-hole, a spring(211) is provided between the force exerting lever (210) and the force exerting cover (209); and
the other end of the force exerting lever (210) acts on the idle wheel (203), so as to apply a pressure to the idle wheel (203).

5. The system according to claim 4, wherein, the force exerting device further comprises a force exerting wheel (212), wherein
the other end of the force exerting lever (210) is connected to the force exerting wheel (212) via a bearing (206); and
the force exerting wheel (212) is in contact with the idle wheel (203).

6. The system according to claim 3, wherein, the force exerting device comprises a hydraulic cylinder, wherein
a piston end of the hydraulic cylinder is fixedly connected to the rack, and a cylinder body end of the hydraulic cylinder away from the piston end is connected to the idle wheel (203) via a bearing (206).

7. The system according to any one of claims 1 to 6, wherein, the speed measuring device comprises two speed measuring gears(213) and two speed sensors(214), wherein
one speed measuring gear (213) is configured to rotate driven by the driving wheel (201), and the other speed measuring gear (213) is configured to rotate driven by the driven wheel (202); and
the two speed sensors(214) are configured to detect rotation speeds of the two speed measuring gears(213), respectively, so that the control device can determine rotation speeds of the driving wheel (201) and the driven wheel (202).

8. The system according to any one of claims 1 to 6, wherein, the speed measuring device comprises two angle encoders, wherein
one angle encoder is sleeved on a central shaft of the driving wheel (201) for detecting rotation speed of the driving wheel (201); the other angle encoder is sleeved on a central shaft of the driven wheel (202) for detecting rotation speed of the driven wheel (202).

9. An adhesion test method using the adhesion test system according to any one of claims 1 to 8, comprising:
receiving, by a control device, rotation speeds of a driving wheel (201) and a driven wheel (202), transmitted by a speed measuring device;
multiplying, by the control device, based on the rotation speeds of the driving wheel (201) and the driven wheel (202), the rotation speed of the driving wheel (201) by a radius of the driving wheel (201) to produce a first product, and multiplying the rotation speed of the driven wheel (202) by a radius of the driven wheel (202) to produce a second product;
determining, by the control device, whether a difference between the first product and the second product is greater than a preset threshold; and
generating, by the control device, an idle-sliding signal, when the difference is greater than the preset threshold; wherein
the driving wheel (201) drives the driven wheel (202) to rotate via the idle wheel(203), and a speed transmission between the driving wheel (201) and the driven wheel (202) is achieved by the idle wheel (203).

## Patentansprüche

1. Haftungstestsystem, umfassend ein Antriebsrad (201) zum Simulieren eines sich bewegenden Rades, ein angetriebenes Rad (202) zum Simulieren einer Stahlschiene, eine Antriebseinrichtung, eine Geschwindigkeitsmesseinrichtung und eine Steuerungseinrichtung;
wobei die Antriebseinrichtung eingerichtet ist, eine Antriebskraft zum Drehen des Antriebsrades (201) bereitzustellen;
das Antriebsrad (201) eingerichtet ist, das angetriebene Rad (202) unter dem Antrieb der Antriebseinrichtung zur Rotation anzutreiben;
wobei die Geschwindigkeitsmesseinrichtung eingerichtet ist, Drehgeschwindigkeiten des Antriebsrades (201) und des angetriebenen Rades (202) zu erfassen und die Drehgeschwindigkeiten des Antriebsrades (201) und des angetriebenen Rades (202) an die Steuerungseinrichtung zu übertragen; und
die Steuerungseinrichtung eingerichtet ist, zu bestimmen, ob ein Leerlaufgleitphänomen auftritt gemäß den Drehgeschwindigkeiten des Antriebsrades (201) und des angetriebenen Rades (202), und ein Leerlaufgleitsignal zu erzeugen, wenn bestimmt wird, dass ein Leerlaufgleitphänomen auftritt;
**dadurch gekennzeichnet, dass**
das Haftungstestsystem ferner ein Leerlaufrad (203) umfasst, das jeweils mit dem Antriebsrad (201) und dem angetriebenen Rad (202) in Kontakt ist; wobei das Antriebsrad (201) eingerichtet ist, das angetriebene Rad (202) über das Leerlaufrad (203) zur Rotation anzutreiben.

2. System nach Anspruch 1, ferner umfassend eine Kraftausübungseinrichtung, wobei die Kraftausübungseinrichtung eingerichtet ist, einen radialen Druck auf das Antriebsrad (201) und das angetriebene Rad (202) anzupassen, um verschiedene Haftungszustände zu simulieren.

3. System nach Anspruch 2, ferner umfassend ein Gestell zur Aufnahme des Antriebsrades (201) und des angetriebenen Rades (202), wobei
das Gestell eine obere Abdeckung (204) und eine untere Basis (205) umfasst, und die obere Abdeckung (204) mit der unteren Basis (205) fest verschraubt ist; und
die untere Basis (205) mit dem Antriebsrad (201) und dem angetriebenen Rad (202) jeweils über ein Lager (206) verbunden ist.

4. System nach Anspruch 3, wobei die Kraftausübungseinrichtung eine Kraftausübungsabdeckung (209) und einen Kraftausübungshebel (210) umfasst,
wobei ein Durchgangsloch auf der oberen Abdeckung (204) geöffnet ist, ein Innengewinde innerhalb des Durchgangsloches vorgesehen ist, ein Außengewinde auf der Kraftausübungsabdeckung (209) vorgesehen ist und die Kraftausübungsabdeckung (209) über das Innengewinde und das Außengewinde mit der oberen Abdeckung (204) verbunden ist;
ein Ende des Kraftausübungshebels (210) in das Durchgangsloch hineinragt, eine Feder (211) zwischen dem Kraftausübungshebel (210) und der Kraftausübungsabdeckung (209) vorgesehen ist; und
das andere Ende des Kraftausübungshebels (210) auf das Leerlaufrad (203) einwirkt, um das Leerlaufrad (203) mit einem Druck zu beaufschlagen.

5. System nach Anspruch 4, wobei die Kraftausübungseinrichtung ferner ein Kraftausübungsrad (212) umfasst, wobei
das andere Ende des Kraftausübungshebels (210) über ein Lager (206) mit dem Kraftausübungsrad (212) verbunden ist; und
das Kraftausübungsrad (212) mit dem Leerlaufrad (203) in Kontakt ist.

6. System nach Anspruch 3, wobei die Kraftausübungseinrichtung einen hydraulischen Zylinder umfasst, wobei
ein Kolbenende des hydraulischen Zylinders mit dem Gestell fest verbunden ist, und ein Zylindergehäuseende des hydraulischen Zylinders, das vom Kolbenende entfernt ist, über ein Lager (206) mit dem Leerlaufrad (203) verbunden ist.

7. System nach einem der Ansprüche 1 bis 6, wobei die Geschwindigkeitsmesseinrichtung zwei Geschwindigkeitsmesszahnräder (213) und zwei Geschwindigkeitssensoren (214) umfasst, wobei
ein Geschwindigkeitsmesszahnrad (213) eingerichtet ist, sich angetrieben durch das Antriebsrad (201) zu drehen und das andere Geschwindigkeitsmesszahnrad (213) eingerichtet ist, sich angetrieben durch das angetriebene Rad (202) zu drehen; und
die zwei Geschwindigkeitssensoren (214) eingerichtet sind, Drehgeschwindigkeiten der zwei Geschwindigkeitsmesszahnräder (213) jeweils zu erfassen, so dass die Steuerungseinrichtung Drehgeschwindigkeiten des Antriebsrades (201) und des angetriebenen Rades (202) bestimmen kann.

8. System nach einem der Ansprüche 1 bis 6, wobei die Geschwindigkeitsmesseinrichtung zwei Winkelcodierer umfasst, wobei
ein Winkelcodierer auf einer zentralen Welle des Antriebsrads (201) zum Erfassen der Drehgeschwindigkeit des Antriebsrads (201) aufgehülst ist; der andere Winkelcodierer auf einer zentralen Welle des angetriebenen Rades (202) zum Erfassen der Drehgeschwindigkeit des angetriebenen Rades (202) aufgehülst ist.

9. Haftungstestverfahren unter Verwendung des Adhäsionstestsystems nach einem der Ansprüche 1 bis 8, umfassend:
Empfangen, durch eine Steuerungseinrichtung, von Drehgeschwindigkeiten eines Antriebsrades (201) und eines angetriebenen Rades (202), die durch eine Geschwindigkeitsmesseinrichtung übertragen werden;
Multiplizieren, durch die Steuerungseinrichtung, auf der Grundlage der Drehgeschwindigkeiten des Antriebsrades (201) und des angetriebenen Rades (202), der Drehgeschwindigkeit des Antriebsrades (201) mit einem Radius des Antriebsrades (201), um ein erstes Produkt zu erzeugen, und Multiplizieren der Drehgeschwindigkeit des angetriebenen Rades (202) mit einem Radius des angetriebenen Rades (202), um ein zweites Produkt zu erzeugen;
Bestimmen, durch die Steuerungseinrichtung, ob eine Differenz zwischen dem ersten Produkt und dem zweiten Produkt größer ist als ein voreingestellter Schwellenwert; und
Erzeugen, durch die Steuerungseinrichtung, eines Leerlaufgleitsignals, wenn die Differenz größer ist als der voreingestellte Schwellenwert; wobei das Antriebsrad (201) das angetriebene Rad (202) über das Leerlaufrad (203) zur Rotation antreibt, und eine Geschwindigkeitsübertragung zwischen dem Antriebsrad (201) und dem angetriebenen Rad (202) durch das Leerlaufrad (203) erzielt wird.

## Revendications

1. Système de test d'adhérence, comprenant une roue motrice (201) pour simuler une roue mobile, une roue entraînée (202) pour simuler un rail en acier, un dispositif d'entraînement, un dispositif de mesure de vitesse et un dispositif de commande ;
le dispositif d'entraînement est configuré pour fournir une force d'entraînement pour faire tourner la roue motrice (201) ;
la roue motrice (201) est configurée pour entraîner la roue entraînée (202) à tourner par le biais de l'entraînement du dispositif d'entraînement ;
le dispositif de mesure de vitesse est configuré pour détecter les vitesses de rotation de la roue motrice (201) et de la roue entraînée (202), et transmettre les vitesses de rotation de la roue motrice (201) et de la roue entraînée (202) au dispositif de commande ; et
le dispositif de commande est configuré pour déterminer si un phénomène de glissement au ralenti a lieu selon les vitesses de rotation de la roue motrice (201) et de la roue entraînée (202), et générer un signal de glissement au ralenti lorsque l'on détermine qu'un phénomène de glissement au ralenti a lieu ;
**caractérisé par** :
le système de test d'adhérence qui comprend en outre une roue folle (203) en contact avec la roue motrice (201) et la roue entraînée (202) respectivement ; dans lequel la roue motrice (201) est configurée pour entraîner la roue entraînée (202) à tourner via la roue folle (203).

2. Système selon la revendication 1, comprenant en outre un dispositif d'exercice de force, dans lequel le dispositif d'exercice de force est configuré pour ajuster une pression radiale sur la roue motrice (201) et la roue entraînée (202), afin de simuler différents états d'adhérence.

3. Système selon la revendication 2, comprenant en outre une crémaillère pour recevoir la roue motrice (201) et la roue entraînée (202), dans lequel :
la crémaillère comprend un couvercle supérieur (204) et une base inférieure (205), et le couvercle supérieur (204) est boulonné de manière fixe sur la base inférieure (205) ; et
la base inférieure (205) est raccordée à la roue motrice (201) et à la roue entraînée (202) via un palier (206), respectivement.

4. Système selon la revendication 3, dans lequel le dispositif d'exercice de force comprend un couvercle d'exercice de force (209) et un levier d'exercice de force (210), dans lequel :
un trou débouchant est ouvert sur le couvercle supérieur (204), un filetage interne est prévu à l'intérieur du trou débouchant, un filetage externe est prévu sur le couvercle d'exercice de force (209), et le couvercle d'exercice de force (209) est raccordé au couvercle supérieur (204) via le filetage interne et le filetage externe ;
une extrémité du levier d'exercice de force (210) fait saillie dans le trou débouchant, un ressort (211) est prévu entre le levier d'exercice de force (210) et le couvercle d'exercice de force (209) ; et
l'autre extrémité du levier d'exercice de force (210) agit sur la roue folle (203), afin d'appliquer une pression sur le roue folle (203).

5. Système selon la revendication 4, dans lequel le dispositif d'exercice de force comprend en outre une roue d'exercice de force (212), dans lequel :
l'autre extrémité du levier d'exercice de force (210) est raccordée à la roue d'exercice de force (212) via un palier (206) ; et
la roue d'exercice de force (212) est en contact avec la roue folle (203).

6. Système selon la revendication 3, dans lequel le dispositif d'exercice de force comprend un cylindre hydraulique, dans lequel :
une extrémité de piston du cylindre hydraulique est raccordée de manière fixe à la crémaillère, et une extrémité de corps de cylindre du cylindre hydraulique à distance de l'extrémité de piston est raccordée à la roue folle (203) via un palier (206).

7. Système selon l'une quelconque des revendications 1 à 6, dans lequel le dispositif de mesure de vitesse comprend deux engrenages de mesure de vitesse (213) et deux capteurs de vitesse (214), dans lequel :
un engrenage de mesure de vitesse (213) est configuré pour tourner, entraîné par la roue motrice (201), et l'autre engrenage de mesure de vitesse (213) est configuré pour tourner, entraîné par la roue entraînée (202) ; et
les deux capteurs de vitesse (214) sont configurés pour détecter les vitesses de rotation des deux engrenages de mesure de vitesse (213) respectivement, de sorte que le dispositif de commande peut déterminer les vitesses de rotation de la roue motrice (201) et de la roue entraînée (202).

8. Système selon l'une quelconque des revendications 1 à 6, dans lequel le dispositif de mesure de vitesse comprend deux encodeurs d'angle, dans lequel :
un encodeur d'angle est emmanché sur un arbre central de la roue motrice (201) pour détecter la vitesse de rotation de la roue motrice (201) ; l'autre encodeur d'angle est emmanché sur un arbre central de la roue entraînée (202) pour détecter la vitesse de rotation de la roue entraînée (202).

9. Procédé de test d'adhérence utilisant le système de test d'adhérence selon l'une quelconque des revendications 1 à 8, comprenant les étapes consistant à :
recevoir, grâce à un dispositif de commande, les vitesses de rotation d'une roue motrice (201) et d'une roue entraînée (202), transmises par un dispositif de mesure de vitesse ;
multiplier, grâce au dispositif de commande, sur la base des vitesses de rotation de la roue motrice (201) et de la roue entraînée (202), la vitesse de rotation de la roue motrice (201) par un rayon de la roue motrice (201) pour produire un premier produit, et multiplier la vitesse de rotation de la roue entraînée (202) par un rayon de la roue entraînée (202) afin de produire un second produit ;
déterminer, grâce au dispositif de commande, si une différence entre le premier produit et le second produit est supérieure à un seuil prédéterminé ; et
générer, grâce au dispositif de commande, un signal de glissement au ralenti, lorsque la différence est supérieure au seuil prédéterminé ; dans lequel :
la roue motrice (201) entraîne la roue entraînée (202) à tourner, via la roue folle (203), et une transmission de vitesse entre la roue motrice (201) et la roue entraînée (202) est obtenue grâce à la roue folle (203).
